# EUROPEAN PATENT SPECIFICATION

(11) **EP 1 177 825 B1**
(45) Date of publication and mention of the grant of the patent: **20.04.2005**
(21) Application number: 01118410.8
(22) Date of filing: 31.07.2001
(51) Int. Cl.: B01D 24/14, B01D 24/46

(54) **Method and device for backwashing sand bed filtration units**
Verfahren und Vorrichtung zum Rückspülen von Sandfilterbetteinheiten
Procédé et dispositif de rinçage à contre-courant d' unités de lit de sable filtrant

(30) Priority: 04.08.2000 IT VI000179
(43) Date of publication of application: 06.02.2002
(73) Proprietor: Idrosistem Energy S.r.l., 36061 Bassano Del Grappa, (Vicenza) (IT)
(72) Inventor: Trevisan, Saverio, 36061 Bassano Del Grappa, (Vicenza) (IT)

(56) References cited:
- EP-A- 0 385 050
- GB-A- 1 177 811
- US-A- 4 479 880
- US-A- 4 976 873

## Description

The present invention relates to a method and a device for backwashing sand bed filter units, particularly but not exclusively to be used for filtration of process water in plants for the production of so-called non-woven fabric.

It is known to manufacture non-woven fabric by subjecting a layer of fabric, prepared continuously by a rotating carding machine, to high-pressure water jets generated by injectors that produce its pile. The water is rich in fibers and is collected in a tank, from which it is conveyed toward filter units that separate the particles from the water, which is returned to the plant for the cycle.

Conventional filter units are constituted by a large container, known as band filter, which is internally provided with a filtering layer of non-woven fabric. The layer is arranged on a conveyor belt which is made of steel and onto which the water, loaded with particles, that arrives from the tank is allowed to fall. By doing so, the particles are captured by the fabric of the belt, while the water is collected in the bottom of the container and is then returned to the production plant.

Those types of production plant have been more recently abandoned, because they are unable to separate the finer particles from the water, which therefore, when returned to circulation, produces the undesirable effect of clogging the injectors. Accordingly, those filtration units have been replaced with other units of the sand bed pressure filter type. In more detail, the sand bed pressure filter units are constituted by a substantially vertical vessel which is generally raised with respect to the plane of the floor by a plurality of supports. The vessel forms a cylindrical chamber which is delimited, in a lower region, by a plate-like bottom which is provided with a plurality of nozzle-shaped holes for discharging the filtered water, which collects in the dome that lies below the bottom. A vast layer of sand bed is accommodated inside the chamber and above it and is formed by grains of sand having a high silicon content with differentiated particle size distribution. More specifically, there is a first layer having a particle size distribution of approximately 5-8 millimeters, a second layer having a particle size distribution of 3-5 millimeters, and a third layer having a particle size distribution of 0.3 to 0.5 millimeters. A means for distributing the water to be filtered is also arranged inside the chamber directly above the sand bed and is constituted by a four-spoke cross with central water distribution, in which each spoke has a plurality of nozzles for introducing the water to be filtered into the chamber so as to form a sort of vortex on the surface of the sand bed. The vessel is also provided with a plurality of openings required to exchange fluids with the outside environment. More specifically, the vessel has a first opening, provided in a lower region, for discharging the filtered water and for introducing the backwashing water: a second opening, formed in a lower region, for introducing the backwashing air; an opening, formed in the side wall, for supplying the distribution means; and an opening, formed in an upper region, for the exit of the backwashing water. During operation, the sand bed separates the particles dispersed in the discharge water of the non-woven fabric production plant and returns it to the plant with a very high degree of purity. Clearly, the sand bed gradually tends to become clogged and it is therefore necessary to backwash it in order to free it of its impurities. Accordingly, when certain preset flow-rate and pressure values are reached on the duct that connects the untreated water collection tank to the inlet of the filtration unit, the backwashing process is started according to the following steps:
-- gradual emptying of the vessel through the first opening and the upper opening;
-- backwashing with air alone, introduced through the second opening and evacuated through the upper opening;
-- backwashing with air and water, introduced respectively through the opening in the bottom and the second opening and evacuated through the upper opening;
-- backwashing with water alone, introduced through the first opening and evacuated through the upper opening;
-- a series of at least two backwashes in succession with water and air separately, introduced respectively from the first opening and from the second opening and evacuated from the upper opening;
-- discharge of the first filtrate.

Those steps have a preset duration, which is set by means of a programmable controller, of the PLC type, provided with a keyboard and a display. Moreover, the butterfly valves associated with the various openings are opened and closed automatically by means of pneumatic actuators which are controlled by the programmable controller.

The main drawback of the above described filtration unit is that the vessel is not emptied completely. Accordingly, the sand bed retains a certain amount of water, which is discharged when air is injected into the vessel at the beginning of the backwashing operation. The water thus discharged has the undesirable consequence of entraining a certain amount of sand. Accordingly, the sand bed gradually decreases and loses its effectiveness in retaining the impurities therein. It thus becomes necessary to periodically halt the plant in order to restore the correct thickness of the sand bed. That downtime is rather onerous from the economic point of view, not so much due to the cost of the sand to be topped up in order to restore the correct thickness of the bed but due to the temporary halting of the entire non-woven fabric production plant until the assigned operators have completed the top-up operations.

Another drawback of the above described units is that during the introduction of air and water, a considerable amount of sand remains dispersed by bubbling in the water that rises above the sand bed. At the time of discharge, the water entrains such sand, causing the already mentioned undesirable consequences. Accordingly, the operators assigned to the units are forced to determine by trial and error the moment when the water reaches the vicinity of the upper opening and then momentarily stop the unit so that the sand precipitates again onto the bed before continuing with the backwashing operation.

The aim of the present invention is to solve the drawbacks noted above in conventional filtering units by providing a method and a device for backwashing sand bed filtration units that minimize the loss of sand together with water during the backwashing of the units.

An object of the invention is to provide a method and a device that allow to optimize the backwashing steps by constantly monitoring the level reached by the water in the unit during the various steps.

A further object of the invention is to provide a method and a device that do not extend excessively the duration of the backwashing, so as to avoid increasing the costs related to plant downtime.

Still a further object of the invention is to provide a device which is inexpensive and can also be applied to units that are already in operation.

This aim, these objects and others which will become better apparent hereinafter are achieved by a method for backwashing sand bed filtration units, comprising the steps of:
- reducing the level of the water contained in the unit;
- backwashing the sand bed with air alone;
- backwashing the sand bed with water and air;
- backwashing the sand bed with water alone;
- a series of at least two backwashes of the sand bed with water and air separately;
- discharging the first filtrate, and
comprising, between the step of backwashing with air and water and the step of backwashing with water alone, a step of precipitating the sand dispersed by bubbling in the water that rises above the sand bed.

This aim, these objects and others which will become better apparent hereinafter are also achieved by a device for backwashing sand bed filtration units, comprising a substantially vertical vessel which forms a chamber which is delimited in a lower region by a bottom, which is provided with a plurality of nozzle-fitted holes for the passage of the filtered water and accommodates the sand bed and a means for distributing the water to be filtered which is arranged directly above the sand bed, the vessel being provided with at least one first opening, formed in a lower region, for discharging the filtered water and for introducing the backwashing water, at least one second opening, formed in a lower region, for introducing the backwashing air, at least one laterally provided opening for feeding the distribution means for distributing the water to be filtered and at least one opening, provided in an upper region, for the exit of the backwashing water, characterized in that it comprises a first sensor, which is arranged substantially at said distribution means for distributing the water to be filtered and detects the level of the water inside the filter with respect to the sand bed, and a second sensor, which is arranged proximate to the opening formed in an upward region for the exit of the backwashing water and detects the level reached by the backwashing water in the vessel.

Further characteristics and advantages of the invention will become better apparent from the description of a preferred but not exclusive embodiment thereof, illustrated only by way of non-limitative example in the accompanying two drawings, wherein:
Figure 1 is an elevation view of a sand bed filtration unit provided with the device according to the invention and without the control components;
Figure 2 is a top view of the unit of Figure 1;

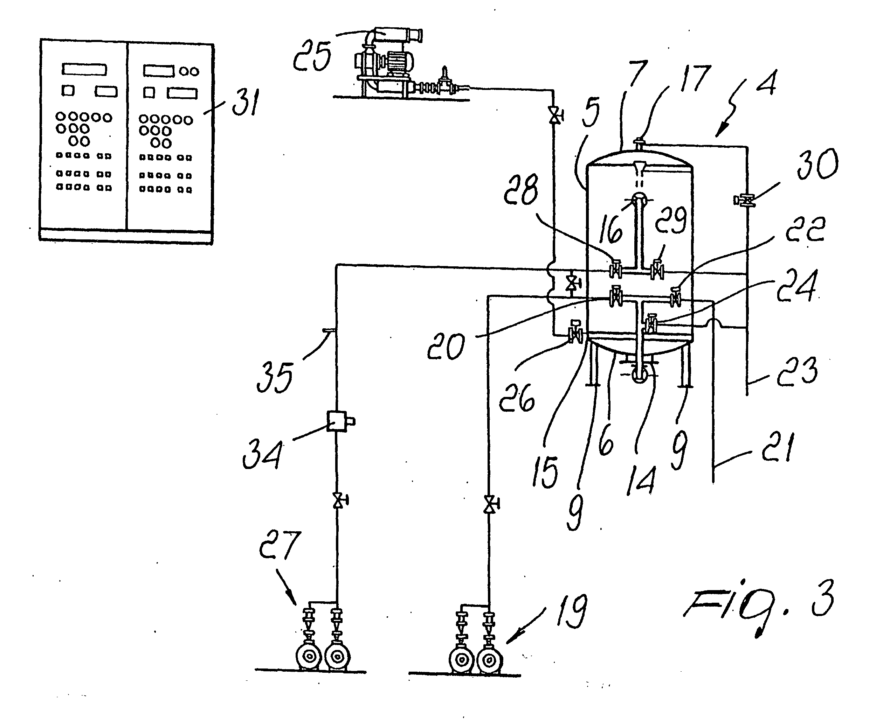

Figure 3 is a schematic view of the filtration unit of Figure 1, equipped with the control components.

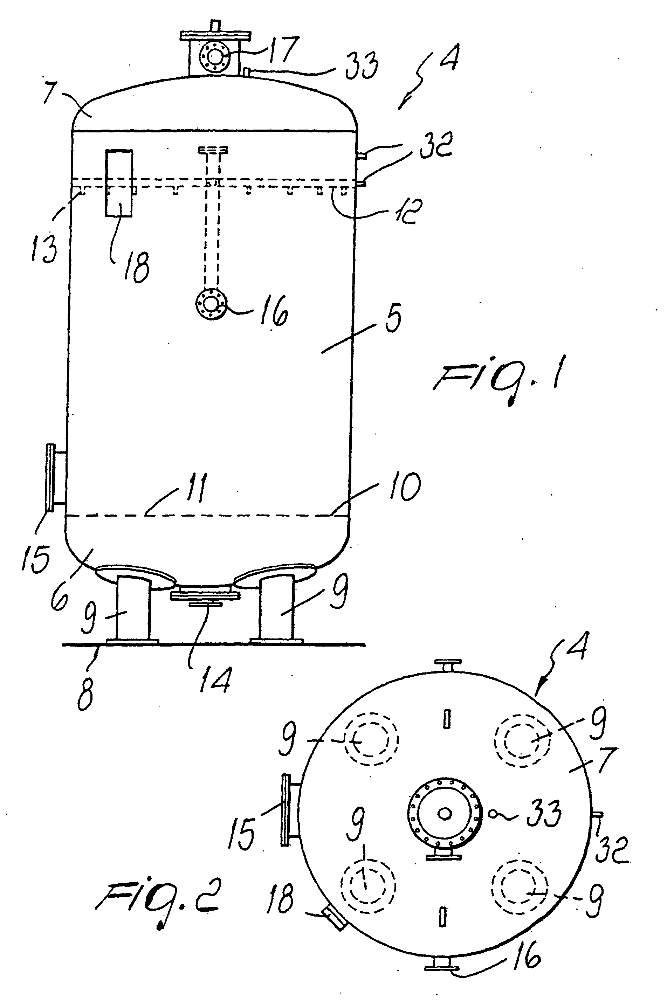

With reference to the above figures, the sand bed filtration unit, generally designated by the reference numeral 4, is constituted by a cylindrical vessel 5, which is closed in an upper region and in a lower region by two domes which are respectively designated by the reference numerals 6 and 7. With reference to Figure 1, the unit 4 is arranged, according to the prior art, vertically and raised with respect to the floor level 8 by four supports, designated by the reference numeral 9, which are connected to the lower dome 6.

The vessel 5 forms a capacious chamber (not shown), which is delimited in a lower region by a bottom 10 provided with a plurality of nozzle-shaped holes 11 for the passage of the filtered water.

The chamber accommodates a thick sand bed (not shown), which is constituted by a plurality of layers having different particle size distributions and a means 12 for distributing the water to be filtered which is located directly above the sand bed.

The distribution means is constituted, again according to the prior art, by a four-spoke cross with central entry of the water to be filtered, in which each spoke is provided with a plurality of nozzles 13 which distribute the water in a vortex-like pattern on the upper surface of the sand bed.

The unit 4 is provided with a plurality of openings required for the exchange of fluids with the control components. More specifically, at the center of the dome 6 there is a first opening 14 for discharging the filtered water and for introducing the backwashing water, and on the edge of the dome 6, at the bottom 10, there is a second opening 15 for introducing the backwashing air. Approximately halfway along the height of the vessel 5 there is an opening 16 for feeding the distribution means 12, and finally, at the center of the dome 7, there is an opening 17 for the exit of the backwashing water.

A port 18 is provided in the vessel 5 at the distribution means 12 and is provided with a transparent screen, so as to allow to view the inside of the unit 4.

These openings are connected, by means of piping branches, to control components.

Specifically, the opening 14 is connected to the backwashing pumps 19 with an interposed control valve 20, to the discharge of the filtered water 21 with an interposed control valve 22, and to the backwashing water discharge 23 with an interposed control valve 24. In turn, the opening 15 is connected to a blower unit 25 with an interposed control valve 26.

The opening 16 is connected to pumps for feeding the water to be filtered 27 with an interposed control valve 28 and to the backwashing discharge 23 by means of a normally-closed valve 29. The opening 17 is connected to the backwashing discharge 23 with an interposed control valve 30.

The unit is also equipped with an electrical panel 31 which is provided with a programmable controller of the PLC type, with a keyboard and a display, which allows to set the operating sequences of the unit.

A particular feature of the invention is that the device comprises a first sensor 32, which is arranged substantially at the distribution means 12 and detects the level of the water in the filter with respect to the sand bed, and a second sensor 33, which is arranged proximate to the upper end 17 and in turn detects the level reached by the backwashing water inside the vessel 5.

More specifically, the function of the first level sensor 32 is to check whether the vessel 5 is partially empty before backwashing. In turn, the function of the sensor 33 is to check whether the level of the backwashing water has reached the upper opening 17.

The operating sequences of the unit 4, during backwashing according to the method, are as follows. When, during filtration, the sensors 34 and 35 arranged on the piping branch that connects the feed pumps 27 to the opening 16 indicate that preset pressure and flow-rate values have been reached, it is necessary to proceed with the backwashing of the sand bed.

According to the prior art, the first step consists in partially emptying the vessel 5 of the water contained therein. During this step, the valves 24 and 30 are in the open position and the other valves 20, 22, 26 and 28 are in the closed position.

Specifically, the water contained in the vessel 5 exits from the lower dome 6 through the opening 14 and is discharged from the backwashing discharge 23. This step is controlled by a time parameter and by the indications of the first sensor 32. In particular, a certain duration of the emptying step is set by means of the panel 31. At the end of this duration, if the first sensor 32 indicates that water is still present in the dome 7, the step continues until the first sensor 32 indicates that the level of the water contained in the vessel 5 is lower than the level of the sensor 32.

Once this first step has been performed, the second step begins. The second step consists of the per se known backwashing of the sand bed with air.

Then the valve 26 is set to the open position, while the other valves 20, 22, 24 and 28 are set to the closed position.

Then the blower 25 introduces air in the vessel 5 for a preset duration.

This second step is followed by a third step, which consists of the combined backwashing of the sand bed with water and air.

During the third step, the valves 20, 26 and 30 are set to the open position, while the valves 22, 24 and 28 are set to the closed position.

Then the pumps 19 and the blower 25 simultaneously and respectively introduce in the vessel 5 water and air. This step is controlled according to a preset duration and to the level reached by the water inside the vessel 5 detected by the second sensor 33. In particular, if the water reaches inside the vessel 5 the upper opening 17 before the preset duration of the step has elapsed, the second sensor 33 is activated and halts the execution of the step so as to avoid the discharge of water and sand from the upper opening 17.

According to the invention, a precipitation step is now introduced. In this case, the sand dispersed by bubbling in the water that rises above the sand bed is allowed to precipitate for a preset time.

Once this step has ended, it is followed by a step of backwashing with water alone. During this step, the valves 20 and 30 are set to the open position, while the remaining valves 22, 24, 26 and 28 are set to the closed position. Then the pumps 19 introduce water in the vessel 5, for a preset time, through the lower opening 14, so that the water thus introduced exits from the upper opening 17 and is discharged by means of the backwashing discharge 23. This step is followed by a series of at least two backwashing operations performed with air and water separately, so as to fully clear the sand bed of any remaining impurities.

Backwashing ends by discharging the first filtrate.

In practice it has been observed that the method and the device for backwashing achieve the intended aim and objects, since they allow to minimize the loss of sand together with water during backwashing.

The method and the device, according to the invention, optimize the backwashing sequences of sand bed filtration units, since they allow to know at all times the level reached by the water during the various steps.

Moreover, the introduction of a further precipitation step does not extend the backwashing cycle excessively.

In summary, the device applied to the above units is inexpensive and can also be applied to already-installed and operating units.

The method and the device according to the invention are susceptible of numerous modifications and variations, within the scope of the appended claims.

All the details may be replaced with other technically equivalent elements.

In practice, the materials used, as well as the contingent shapes and dimensions, may be any according to requirements.

## Claims

1. A method for backwashing sand bed filtration units, comprising the steps of:
-- reducing the level of the water contained in said unit;
-- backwashing said sand bed with air alone;
-- backwashing said sand bed with water and air;
-- backwashing said sand bed with water alone;
-- discharging the first filtrate, and
comprising, between the step of backwashing with air and water and the step of backwashing with water alone, a step of precipitating the sand dispersed by bubbling in the water that rises above said sand bed.

2. The method according to claim 1, **characterized in that** said precipitation step has a duration of at least two minutes.

3. The method according to one or more of the preceding claims, **characterized in that** said emptying step is regulated according to a preset time or, as an alternative, by the level reached by said water inside the filter above said sand bed.

4. The method according to one or more of the preceding claims, **characterized in that** said step for backwashing with air and water is regulated according to a preset time or, as an alternative, according to the level of said backwashing reached in said vessel. ,

5. A device for backwashing sand bed filtration units, comprising a substantially vertical vessel which forms a chamber which is delimited, in a lower region, by a bottom which is provided with a plurality of nozzle-fitted holes for the passage of the filtered water and accommodates said sand bed, and a means for distributing the water to be filtered which is located directly above said sand bed, said vessel being provided with at least one first opening, formed in a lower region, for discharging the filtered water and for introducing the backwashing water; at least one second opening, formed in a lower region, for introducing the backwashing air; at least one opening, formed laterally, for feeding said distribution means for distributing the water to be filtered; and at least one opening, formed in an upper region, for the exit of the backwashing water, **characterized in that** it comprises a first sensor, which is arranged substantially at said distribution means for distributing the water to be filtered and detects the level of said water inside the filter above said sand bed, and a second sensor, which is arranged proximate to said opening formed in an upper region for the exit of the backwashing water and detects the level reached by said backwashing water in said vessel.

## Patentansprüche

1. Verfahren zum Rückspülen von Sandbettfilter-Einheiten, enthaltend die Schritte:
- Reduzieren des Niveaus des in der Einheit enthaltenen Wassers;
- Rückspülen des Sandbetts allein mit Luft;
- Rückspülen des Sandbetts mit Wasser und Luft;
- Rückspülen des Sandbetts allein mit Wasser;
- Abführen des ersten Filtrats, und
enthaltend zwischen dem Schritt des Rückspülens mit Wasser und Luft und dem Schritt des Rückspülens allein mit Wasser einen Abscheidungsschritt für den Sand, der durch Blasenbildung in dem über das Sandbett ansteigenden Wasser dispergiert ist.

2. Verfahren nach Anspruch 1, **dadurch gekennzeichnet, dass** der Abscheidungsschritt eine Dauer von wenigstens zwei Minuten hat.

3. Verfahren nach einem oder mehreren der vorstehenden Ansprüche, **dadurch gekennzeichnet, dass** der Entleerungsschritt durch eine voreingestellte Zeit oder alternativ durch das Niveau reguliert wird, das vom Wasser innerhalb des Filters oberhalb des Sandbetts erreicht wird.

4. Verfahren nach einem oder mehreren der vorstehenden Ansprüche, **dadurch gekennzeichnet, dass** der Rückspülschritt mit Luft und Wasser durch eine voreingestellte Zeit oder alternativ durch das Niveau der im Behälter erreichten Rückspülung reguliert wird.

5. Gerät zur Rückspülung von Sandbettfilter-Einheiten, enthaltend ein im wesentlichen vertikales Gefäß, das eine Kammer bildet, die in einem unteren Bereich durch einen Boden, der mit einer Vielzahl von eingesetzte Düsen aufweisenden Löchern für den Durchgang des gefilterten Wassers versehen ist und das Sandbett aufnimmt, und ein Mittel zur Verteilung des zu filtrierenden Wassers begrenzt ist, das direkt oberhalb des Sandbetts angeordnet ist, wobei das Gefäß mit wenigstens einer ersten, in einem unteren Bereich ausgebildeten Öffnung für das Entweichen des gefilterten Wassers und das Einleiten des Rückspülwassers, wenigstens einer zweiten, in einem unteren Bereich ausgebildeten Öffnung zur Einführung von Rückspülluft, wenigstens einer seitlich angebrachten Öffnung zur Zuführung des Verteilungsmittels für die Verteilung des zu filtrierenden Wassers und wenigstens einer Öffnung in einem oberen Bereich für den Austritt des Rückspülwassers versehen ist, **dadurch gekennzeichnet, dass** es einen ersten Sensor, der im wesentlichen bei dem Verteilungsmittel für die Verteilung des zu filtrierenden Wassers angeordnet ist und das Niveau des Wassers innerhalb des Filters oberhalb des Betts detektiert, und einen zweiten Sensor enthält, der nahe der in einem oberen Bereich gelegenen Öffnung zum Austritt des Rückspülwassers angeordnet ist und das vom Rückspülwasser im Gefäß erreichte Niveau detektiert.

## Revendications

1. Procédé de lavage à contre-courant d'unités de filtration de couche de coulée, comprenant les étapes suivantes :
- réduire le niveau de l'eau contenue dans ladite unité ;
- laver à contre-courant ladite couche de coulée uniquement avec de l'air ;
- laver à contre-courant ladite couche de coulée avec de l'eau et de l'air ;
- laver à contre-courant ladite couche de coulée uniquement avec de l'eau ;
- évacuer le premier filtrat, et
comprenant, entre l'étape de lavage à contre-courant avec de l'air et de l'eau et l'étape de lavage à contre-courant uniquement avec de l'eau, une étape de précipitation du sable dispersé par insufflation de fines bulles dans l'eau, qui monte au-dessus de ladite couche de coulée.

2. Procédé selon la revendication 1, **caractérisé en ce que** ladite étape de précipitation dure au moins pendant deux minutes.

3. Procédé selon une ou plusieurs des revendications précédentes, **caractérisé en ce que** ladite étape de vidage est régulée selon une durée prédéfinie ou, selon une alternative, par le niveau atteint par ladite eau à l'intérieur du filtre au-dessus de ladite couche de coulée.

4. Procédé selon une ou plusieurs des revendications précédentes, **caractérisé en ce que** ladite étape de lavage à contre-courant avec de l'air et de l'eau est régulée selon une durée prédéfinie ou, selon une alternative, selon le niveau dudit lavage à contre-courant atteint dans ladite cuve.

5. Dispositif permettant de laver à contre-courant des unités de filtration de couche de coulée, comprenant une cuve sensiblement verticale formant une chambre qui est délimitée, dans une région inférieure, par un fond doté d'une pluralité de pluralité de trous adaptés à des buses pour permettre le passage de l'eau filtrée, et reçoit ladite couche de coulée, et des moyens permettant de distribuer l'eau à filtrer, qui sont situés directement au-dessus de ladite couche de coulée, ladite cuve étant dotée d'au moins une première ouverture, formée dans une région inférieure, permettant d'évacuer l'eau filtrée et d'introduire l'eau de lavage à contre-courant ; au moins une deuxième ouverture, formée dans une région inférieure, permettant d'introduire l'air de lavage à contre-courant ; au moins une ouverture, formée latéralement, pour alimenter lesdits moyens de distribution permettant de distribuer l'eau à filtrer ; et au moins une ouverture, formée dans une région supérieure, permettant d'évacuer l'eau de lavage à contre-courant,
**caractérisé en ce qu'**il comprend un premier capteur, qui est agencé sensiblement au niveau desdits moyens de distribution permettant de distribuer l'eau à filtrer et détecte le niveau de ladite eau à l'intérieur du filtre au-dessus de ladite couche de coulée, et un deuxième capteur, qui est agencé à proximité de ladite ouverture formée dans une région supérieure, permettant d'évacuer l'eau de lavage à contre-courant, et détecte le niveau atteint par ladite eau de lavage à contre-courant dans ladite cuve.
